# EUROPÄISCHE PATENTSCHRIFT

(11) **EP 0 330 101 B1**
(45) Veröffentlichungstag und Bekanntmachung des Hinweises auf die Patenterteilung: **14.07.1993**
(21) Anmeldenummer: 89102843.3
(22) Anmeldetag: 18.02.1989
(51) Int. Cl.: A61C 19/04, A61C 11/00

(54) **Vorrichtung zur Analyse der Artikulationsbewegung zwischen Oberkiefer und Unterkiefer**
Device for analysis of articulation between upper and lower jaws
Dispositif pour l'analyse d'articulation entre la mâchoire supérieure et la mâchoire inférieure

(30) Priorität: 26.02.1988 DE 3806028
(43) Veröffentlichungstag der Anmeldung: 30.08.1989
(73) Patentinhaber: Schrader, Erhard, Dr., D-38350 Helmstedt (DE)
(72) Erfinder: Schrader, Erhard, Dr., D-3330 Helmstedt (DE); Riss, Wolfgang, Dipl.Ing., D-3320 Salzgitter 1 (DE); Mende Gottfried, Dr. Ing., D-3302 Cremlingen (DE)
(74) Vertreter: Lins, Edgar, Dipl.-Phys. Dr.jur.

(56) Entgegenhaltungen:
- EP-A- 0 025 201
- DE-A- 3 312 245
- US-A- 3 390 459
- US-A- 4 234 306
- F. SCHOEN et al.: "EUROPÄISCHE PROTHETIK HEUTE" 1978, Seiten 222, 223, Buch- und Zeitschriften-Verlag "Die Quintessenz" Berlin, D; Seite 223; Figuren 6,7

## Beschreibung

Die Erfindung betrifft eine Vorrichtung zur Analyse der Artikulationsbewegung zwischen Oberkiefer und Unterkiefer, insbesondere unter Kontakt der Zähne von Oberkiefer und Unterkiefer, mit zwei in den Oberkiefer und Unterkiefer eingesetzten Platten, die eine Senderanordnung zur Aussendung von Strahlen und eine Empfängeranordnung zur Detektion der emittierten Strahlen aufweisen.

Für die Herstellung von Zahnersatz ist es wesentlich, diesen so zu gestalten, daß die natürliche Artikulationsbewegung des Unterkiefers relativ zum Oberkiefer beibehalten wird und sich die Zähne gegenseitig in geeigneter Weise gegeneinander abstützen. Hierzu wird die individuelle Artikulationsbewegung registriert und in einem geeigneten Artikulator simuliert, in den ein Modell des Patientengebisses eingesetzt wird. Zur Herstellung des Zahnersatzes wird daher immer wieder auf die simulierte Artikulationsbewegung Bezug genommen.

Zur Registrierung der Artikulationsbewegung wird eine Meßvorrichtung benutzt, die am Unterkiefer befestigt wird und einen zu den Unterkiefergelenken (Kondylen) ragenden Bügel aufweist. Der sogenannte Kondylenpol wird dabei abgetastet und eine Schreibspitze des Gesichtsbogens auf diesen Punkt ausgerichtet. Unter die Schreibspitze wird ein Registrierungsblatt gelegt, auf das während der Kaubewegung des Patienten die Bewegung der Kondylen aufgezeichnet wird.

Das übereinstimmend ausgeführte Meßprinzip beteht darin, die Bewegung des Unterkiefers festzustellen, um die individuelle Bewegung des Unterkiefers zum Oberkiefer bei der Herstellung des Zahnersatzes im zahntechnischen Labor möglichst genau zu simulieren. Hierzu sind weiterentwickelte Geräte bekanntgeworden, z.B. der Stereo-Gnathograph-V der Dental-Elektronik KG in 8480 Weiden. Das mechanische Aufzeichnungssystem ist dabei durch ein berührungsloses Bewegungserfassungssystem ersetzt worden, das im Ohrbereich drei Infrarotsender und drei Infrarotempfänger aufweist, zwischen denen eine in geeigneter Weise ausgebildete Platte bewegbar ist, die mit dem Gesichtsbogen verbunden ist. Die Bewegung am kondylenseitigen Ende des Gesichtsbogens wird durch das berührungslose Bewegungserfassungssystem erfaßt und kann elektronisch aufgezeichnet werden. Am eigentlichen Meßprinzip ist hierbei jedoch nichts geändert.

Eine Vorrichtung der eingangs erwähnten Art ist durch EP-A-0025201 bekannt. Diese besteht aus zwei Platten, die in den Oberkiefer und in den Unterkiefer eingesetzt werden. Die in den Oberkiefer eingesetzte Platte ist mit einem Sender versehen, während die in den Unterkiefer eingesetzte Platte drei Empfänger aufweist, die ein etwa gleichseitiges Dreieck bilden. Der Sender bildet mit jedem Empfänger eine Abstandsmeßeinrichtung, wobei die Laufzeit der Sendesignale vom Sender zum jeweiligen Empfänger bestimmt wird.

Es ist ferner bekannt, für diagnostische Zwecke Platten in den Oberkiefer und Unterkiefer einzupassen (Schön/Singer (Hrsg.) Europäische Prothetik heute, Buch- und Zeitschriften-Verlag "Die Quintessenz" 1978, Seiten 222 f), wobei eine der Platten mit einem zentralen spitzen Kegel versehen ist, der so lang ist, daß beim Zubeißen die Zähne nicht in Kontakt miteinander kommen. Durch eine Seitwärtsbewegung des Unterkiefers parallel zum Oberkiefer wird eine Kartzspur in Form eines Pfeils auf der Unterkieferplatte erzeugt, die insbesondere an ihren äußeren Enden Aufschlüsse über die Funktion des Kiefergelenks bei der seitlichen Bewegung des Unterkiefers sowie die Erfassung der zentralen Relation der Kiefer anhand der Lage der Pfeilspitzen erlaubt. Die Analyse einer Kaubewegung, bei der die Zähne in Kontakt miteinander geraten, ist dabei weder vorgesehen noch möglich.

Der Erfindung liegt die Aufgabe zugrunde, eine Vorrichtung der eingangs erwähnten Art so auszubilden, daß eine genaue und zuverlässige Bestimmung der Bewegung des Unterkiefers relativ zum Oberkiefer in einfacher Weise möglich ist.

Diese Aufgabe wird erfindungsgemäß durch die Vorrichtung nach Anspruch 1 gelöst.

In der erfindungsgemäßen Anordnung lassen sich Abstandsveränderungen sowie Kippbewegungen durch die Detektion der sich bei einer Relativbewegung zwischen Ober- und Unterkiefer in einer Sensorfläche gegeneinander ändernden Koordinaten der Auftreffpunkte der emittierten Strahlen mit der Empfängeranordnung ohne weiteres feststellen. Je nach Anwendungsfall kann die Kippbewegung sowohl in Längsrichtung als auch in Querrichtung des Unterkiefers ermittelt werden. Zur Ermittlung der relativen Lage der beiden Platten zueinander sowie einer Kippbewegung in eine Richtung werden zwei parallel zueinander stehende Strahlenquellen und wenigstens eine dazu schräg stehende Strahlenquelle verwendet. Der Abstand des Auftreffpunktes der schrägstehenden Strahlenquelle zu einer der parallel angeordneten Strahlenquellen variiert mit der Entfernung der Platten zueinander. Die Auftreffpunkte der beiden parallel zueinander stehenden Strahlenquellen ermöglichen die Detektion einer planparallelen Verschiebung der Platten zueinander sowie einer relativen Kippbewegung, die zu einer Veränderung des Abstandes zwischen den Auftreffpunkten dieser beiden Strahlenquellen führt. Dabei sind die parallel zueinander stehenden Strahlenquellen vorzugsweise so ausgerichtet, daß sie während des Kontaktes der Zähne von Oberkiefer und Unterkiefer im wesentlichen senkrecht zu der Empfängerplatte stehen.

Es ist möglich, daß bei der erfindungsgemäßen Vorrichtung die Strahlenquellen und die Empfängeranordnung auf derselben Platte angeordnet sind und die zweite Platte lediglich als Reflektor für die emittierten Strahlen fungiert. Bevorzugt ist jedoch die Ausführungsform, in der eine Platte die Senderanordnung (Senderplatte) und die andere Platte die Empfängeranordnung (Empfängerplatte) aufweist.

Die Senderanordnung wird im allgemeinen etwas mehr Bauhöhe benötigten als die Empfängeranordnung, so daß es zweckmäßig ist, die Platte mit der Senderanordnung in den Oberkiefer einzusetzen, wo aufgrund der individuellen anatomischen Situation am meisten Platz vorhanden ist.

Die Erfindung soll im folgenden an eines in der Zeichnung dargestellten Ausführungsbeispiels näher erläutert werden. Es zeigen:
- Figur 1 -: eine Darstellung eines Oberkiefers und eines Unterkiefers mit einer eingesetzten Senderplatte und einer eingesetzten Empfängerplatte
- Figur 2 -: einen Prinzipaufbau für drei Lichtquellen auf der Senderplatte relativ zu einem Sensor auf der Empfängerplatte sowie eine prinzipielle Darstellung verschiedender Bewegungen der Platten zueinander.

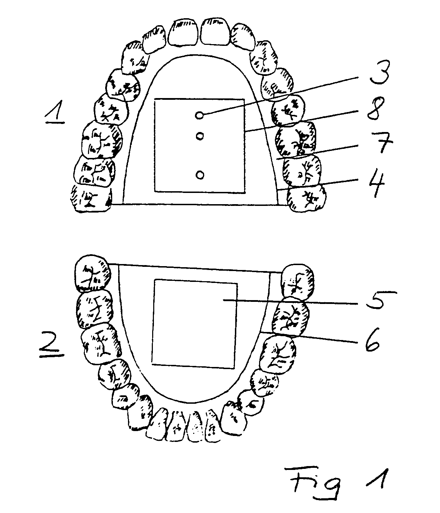

Figur 1 zeigt einen Oberkiefer 1 und einen Unterkiefer 2. In den Oberkiefer 1 ist eine Strahlenquellen 3 tragende erste Platte 4 eingesetzt, die als Senderplatte fungiert, während in den Unterkiefer 2 eine eine Sensorfläche 5 tragende Platte 6 eingesetzt ist. Beide Platten 4, 6 sind mit geeignetem Ausgleichsmaterial 7 eingepaßt.

Die erste Platte 4 (Senderplatte) hält eine Trägerplatte 8, die drei als Strahlenquellen fungierende Lichtquellen 3 trägt.

Die im Unterkiefer eingesetzte zweite Platte 6 (Empfängerplatte) trägt eine Sensorfläche 5, die die Detektion von Auftreffpunkten der Lichtstrahlen mit den Koordinaten auf der Sensorfläche 5 ermöglicht. Hierzu wird die Sensorfläche 5 zeilenförmig abgetastet, wobei jedem Auftreffpunkt ein definierter elektrischer Wert zugeordnet ist.

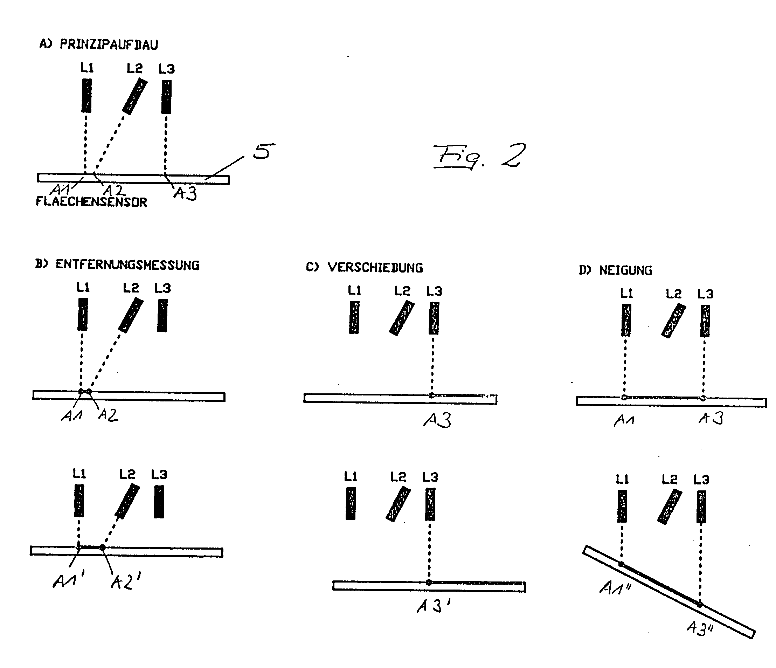

Figur 2 zeigt in der Abbildung A eine Prinzipanordnung für drei Strahlenquellen 3, die hier als Lichtquellen L1, L2, L3 ausgebildet sind. Diese drei Lichtquellen müssen keine selbständige Lichterzeuger sein, sondern können beispielsweise durch Lichtleiter gebildet sein, denen von einem gemeinsamen Lichtgenerator Lichtsignale zugeleitet werden. In einfacher Weise können aber auch normale Glühlampen, Leuchtdioden oder vorzugsweise Laserdioden als Lichtquellen L1, L2, L3 eingesetzt werden.

Die drei auf der Senderplatte 4 befestigten Lichtquellen L1, L2, L3 sind so angeordnet, daß zwei der Lichtquellen, nämlich L1 und L3 parallel zueinander stehen, während eine mittlere, auf der Verbindungslinie der beiden Lichtquellen L1, L3 angeordnete Lichtquelle L2 schräg dazu abstrahlt.

Die drei Lichtquellen erzeugen auf der Sensorfläche 5 Auftreffpunkte A1, A2, A3, deren Lage durch die Sensorfläche 5 detektiert wird.

Wie Abbildung B der Figur 2 zeigt, wird für eine Entfernungsmessung nur das Licht der Lichtquellen L1, L2 benötigt. Wandert die Sensorfläche 5, und damit der Unterkiefer 2 näher an die Senderplatte 4, und damit an den Oberkiefer 1 heran, vergrößert sich der Abstand zwischen den Auftreffpunkten A1′, A2′ der Lichtquellen L1, L2, wenn sich die Strahlen der Lichtquellen L1, L2 in der Ausgangsstellung nicht geschnitten haben.

In Abbildung C ist dargestellt, daß für die Feststellung einer Verschiebung der Sensorfläche 5 nur ein Auftreffpunkt benötigt wird. Die Lage beispielsweise des Auftreffpunktes A3 auf der Sensorfläche 5 ändert sich, wenn diese parallel zu sich selbst verschoben wird, wie dies durch den Auftreffpunkt A3′ verdeutlicht ist.

Abbildung D zeigt die Detektion einer Neigung der beiden Platten 4, 6 zueinander. Die beiden parallel zueinander stehenden Lichtquellen L1, L3 erzeugen bei einer parallelen Ausrichtung der beiden Platten 4, 6 zueinander Auftreffpunkte A1, A3, deren Abstand dem Abstand der Lichtquellen L1, L3 entspricht. Wird die Sensorfläche 5 relativ zu der Senderplatte 4 geneigt, entstehen Auftreffpunkte A1˝, A3˝, deren Abstand voneinander sich proportional zur Neigung in Richtung der Verbindungslinie der beiden Lichtquellen L1, L3 vergrößert. Selbstverständlich ist für die relative Neigungsbestimmung nicht erforderlich, daß die beiden Platten 4, 6 in der Ausgangslage völlig parallel zueinander stehen.

Die in Figur 2 dargestellte Anordnung dient zur Detektion der relativen Bewegungen von Unterkiefer zu Oberkiefer entlang einer Detektionslinie. Eine dreidimensionale Detektion der Bewegung ist durch entsprechende Ergänzung von Lichtqellen, beispielsweise senkrecht zu der Verbindungslinie der Lichtquellen L1, L2, L3 ohne weiteres möglich.

Die Auswertung der ermittelten Meßwerte während eines Bewegungsvorganges wird von einem Rechner vorgenommen. Die Wiedergabe der ermittelten Bewegung ist ohne weiteres in zwei- oder drei-dimensionaler Form möglich.

## Patentansprüche

1. Vorrichtung zur Analyse der Artikulationsbewegung zwischen Oberkiefer (1) und Unterkiefer (2), insbesondere unter Kontakt der Zähne von Oberkiefer (1) und Unterkiefer (2), mit zwei in den Oberkiefer (1) und Unterkiefer (2) einzusetzenden Platten (4, 6), die eine Senderanordnung zur Aussendung von Strahlen und eine Empfängeranordnung zur Detektion der emittierten Strahlen aufweisen, **dadurch gekennzeichnet**, daß die Senderanordnung wenigstens zwei parallel zueinanderstehende Strahlenquellen (L1, L3) und wenigstens eine dazu schräg stehende Strahlenquelle (L2) aufweist, und daß die Empfängeranordnung (5) zur Detektion der sich bei einer Relativbewegung zwischen Ober- und Unterkiefer in einer Sensorfläche (5) gegeneinander ändernden Koordinaten der Auftreffpunkte (A1, A2, A3; A1', A2', A3'; A1'', A3'') der emittierten Strahlen ausgelegt ist.

2. Vorrichtung nach Anspruch 1, dadurch gekennzeichnet, daß eine Platte (4) die Senderanordnung und die andere Platte (6) die Empfängeranordnung aufweist.

3. Vorrichtung nach Anspruch 1 oder 2, dadurch gekennzeichnet, daß die parallel zueinander stehenden Strahlenquellen (L1, L3) während des Kontaktes der Zähne von Oberkiefer (1) und Unterkiefer (2) im wesentlichen senkrecht zu der Empfängerplatte (5) stehen.

## Claims

1. Apparatus for the analysis of the articulation movement between the upper jaw (1) and lower jaw (2), in particular on contact between the teeth of the upper jaw (1) and lower jaw (2), having two plates (4, 6) which are to be inserted into the upper jaw (1) and lower jaw (2) and which have a transmitter arrangement for emitting rays and a receiver arrangement for detecting the emitted rays, characterized in that the transmitter arrangement has at least two mutually parallel ray sources (L1, L3) and at least one ray source (L2) standing obliquely thereto, and in that the receiver arrangement (5) is designed for detection of the coordinates of the impact points (A1, A2, A3; A1', A2', A3'; A1'', A''3) of the emitted rays, which coordinates alter with respect to one another in the event of a relative movement between the upper and lower jaws in a sensor surface (5).

2. Apparatus according to Claim 1, characterized in that one plate (4) has the transmitter arrangement and the other plate (6) has the receiver arrangement.

3. Apparatus according to Claim 1 or 2, characterized in that the mutually parallel ray sources (L1, L3) are substantially perpendicular to the receiver plate (5) during contact of the teeth of the upper jaw (1) and lower jaw (2).

## Revendications

1. Dispositif pour analyser le mouvement articulaire entre mâchoire supérieure (1) et mâchoire inférieure (2), en particulier avec contact des dents de la mâchoire supérieure (1) et de la mâchoire inférieure (2), comportant deux plaques (4, 6) à mettre en place dans la mâchoire supérieure (1) et dans la mâchoire inférieure (2) et qui présentent un agencement émetteur pour émettre des rayons et un agencement récepteur pour détecter les rayons émis, caractérisé en ce que l'agencement émetteur comporte au moins deux sources de rayonnement (L1, L3) orientées parallèlement l'une à l'autre et au moins une source de rayonnement (L2) orientée obliquement par rapport aux sources de rayonnement orientées parallèlement, et en ce que l'agencement récepteur (5) est conçu pour la détection des coordonnées des points d'impact (A1, A2, A3 ; A1', A2', A3' ; A1'', A3'') des rayons émis, coordonnées qui varient les unes par rapport aux autres sur une surface sensible (5) en cas de mouvement relatif entre mâchoire supérieure et inférieure.

2. Dispositif selon la revendication 1, caractérisé en ce qu'une plaque (4) présente l'agencement émetteur et l'autre plaque (6) l'agencement récepteur.

3. Dispositif selon la revendication 1 ou 2, caractérisé en ce que les sources de rayonnement (L1, L3) orientées parallèlement l'une à l'autre sont orientées sensiblement perpendiculairement à la plaque réceptrice (5) lorsqu'il y a contact entre les dents de la mâchoire supérieure (1) et de la mâchoire inférieure (2).
